Europäisches Patentamt

European Patent Office

Office européen des brevets

(11) Veröffentlichungsnummer: **0 065 672**
B1

(19)

(12) # EUROPÄISCHE PATENTSCHRIFT

(45) Veröffentlichungstag der Patentschrift:
02.05.85

(51) Int. Cl.⁴: **A 01 D 78/10**

(21) Anmeldenummer: 82103805.6

(22) Anmeldetag: 04.05.82

(54) Heuwerbungsmaschine.

(30) Priorität: 21.05.81 AT 2280/81

(43) Veröffentlichungstag der Anmeldung:
01.12.82 Patentblatt 82/48

(45) Bekanntmachung des Hinweises auf die Patenterteilung:
02.05.85 Patentblatt 85/18

(84) Benannte Vertragsstaaten:
CH DE FR LI NL

(56) Entgegenhaltungen:
DE - A - 2 749 509
DE - A - 2 749 510
DE - A - 2 852 976
DE - A - 2 919 241
FR - A - 2 245 274

(73) Patentinhaber: Alois Pöttinger Maschinenfabrik GmbH,
A-4710 Grieskirchen (AT)

(72) Erfinder: Frauscher, Josef, A-4942 Gurten 50 (AT)
Erfinder: Leposa, Wolfgang, Sonnfeldsiedlung 30,
A-4710 Grieskirchen (AT)

(74) Vertreter: Dupal, Helmut, Dipl-Ing., Jägerweg 12,
A-4702 Wallern (AT)

## Beschreibung

Die Erfindung betrifft eine Heuwerbungsmaschine mit mindestens zwei angetriebenen Rechenrädern, die mit je einem Stützglied am Boden abgestützt und an einem gemeinsamen Maschinenrahmen gelagert sind, der an einem Zugbalken oder dgl. eines Anbaurahmens für den Anbau an ein Zugfahrzeug um eine im wesentlichen lotrechte Schwenkachse schwenkbar gelagert ist, wobei die Rechenräder an Zinkentragarmen geführte Zinken aufweisen und die Drehachsen der Rechenräder von einer im wesentlichen vertikalen Arbeitsstellung zum Schwadformen in eine zur Vertikalen geneigte Arbeitsstellung zum Zetten verstellbar sind.

Das Umstellen der Heuwerbungsmaschinen von der Schwadstellung in die Wendestellung und umgekehrt erfordert im allgemeinen zeitraubende und langwierige Handgriffe: Beispielsweise müssen zum Umstellen der Heuwerbungsmaschine von der Wendestellung in die Schwadstellung die Drehachsen der Rechenräder in eine im wesentlichen vertikale Lage gebracht und die Drehrichtung der Rechenräder zum gleichsinnigen Umlauf eingestellt werden.

Um dieses Umstellen zu vereinfachen, sind bereits Umstellvorrichtungen bekannt, die automatisch und gleichzeitig ein Schwenken des Maschinenrahmens um eine nahezu senkrechte Achse bewirken, wenn die Neigung der Drehachsen der Rechenräder der Maschine geändert wird. Hiebei ist ein zur Längsachse des Maschinenrahmens parallel verlaufender Zwischenteil vorgesehen, um den der Maschinenrahmen um eine waagrechte Achse verschwenkbar gelagert ist (DE-A-2 749 509, DE-A-2 749 510, DE-A-2 852 976). Alle diese Ausführungen benötigen einen grösseren Aufwand an Bauteilen oder machen die Umstellung von einer Arbeitseinstellung der Maschine in die andere umständlich. Überdies besteht bei diesen Ausführungsformen der Nachteil, dass die Höhenlage der Stützräder der Rechenräder vollständig neu einzustellen ist.

Aufgabe der Erfindung ist es, diese Nachteile zu vermeiden und eine Heuwerbungsmaschine mit einfacher Umstellmöglichkeit zu schaffen, die einen konstruktiv einfachen Aufbau besitzt und auch das Ziehen von Nachtschwaden ermöglicht.

Dies wird gemäss der Erfindung bei einer Heuwerbungsmaschine der eingangs genannten Art dadurch erreicht, dass eine mit ihrer Achse unmittelbar in der Verbindungsebene (e) der im wesentlichen lotrechten Drehachsen der Rechenräder gelegene Lagerhülse mit im wesentlichen horizontaler Achse vorgesehen ist, in welcher der Maschinenrahmen verdrehbar gelagert ist und dass der Maschinenrahmen mit einem Stellhebel drehfest verbunden ist, an dem eine Stellstange einenends gelenkig gelagert ist, die andernends an dem Zugbalken oder dgl. schwenkbar gelagert ist.

Durch diese Anordnung wird ein konstruktiv einfacher Aufbau der Heuwerbungsmaschine und ein leichtes Umstellen der Maschine gewährleistet, sowie das Ziehen von Nachtschwaden ermöglicht.

In Ausgestaltung der Erfindung ist vorgesehen, dass die Lagerhülse in einem Lagerhebel fest mit diesem verbunden angeordnet ist, der um eine im wesentlichen lotrechte Schwenkachse an dem Zugbalken oder dgl. schwenkbar gelagert ist.

Hiebei ist es zweckmässig, dass die Achse der Lagerhülse koaxial zur Längsachse des zumindest teilweise rohrförmig ausgebildeten Maschinenrahmens angeordnet ist und der Maschinenrahmen die Lagerhülse durchsetzt.

Eine konstruktiv einfache und mechanisch stabile Lösung besteht weiters darin, dass der Stellhebel die Lagerhülse übergreift und beidseitig derselben mit dem Maschinenrahmen fest verbunden ist.

Die gelenkige Verbindung zwischen Stellstange und Lagerhülse bzw. Zugbalken wird dadurch gewährleistet, dass die Stellstange an ihren beiden Enden mit je einem Kugelgelenk versehen ist, von denen das eine an dem Zugbalken oder dgl. und das andere an dem Stellhebel angelenkt ist.

Zum Ziehen von Nachtschwaden ist es weiters erforderlich, dass die Stellstange längenveränderlich ausgebildet ist.

Hiebei ist es günstig, dass die Stellstange aus zwei teleskopartig gegeneinander verschiebbaren Teilen besteht, die mittels eines Steckbolzens in mindestens zwei Stellungen feststellbar sind.

Es ist jedoch auch möglich, dass die Stellstange als druckmittelbetätigbarer, insbesondere hydraulischer, Stellzylinder ausgebildet ist.

Es ist weiters vorteilhaft, dass der Maschinenrahmen in bezug auf den Zugbalken oder dgl. mittels einer Verriegelungs- bzw. Rastvorrichtung in mindestens zwei Schwenklagen feststellbar ist.

Hiebei ist es zweckmässig, dass die Verriegelungs- bzw. Rastvorrichtung einen in einer am Zugbalken angeordneten Konsole gelagerten Riegelbolzen und eine mit Rastausnehmungen für denselbenn versehene Rastplatte umfasst, die mit der Lagerhülse fest verbunden ist.

Zum Herstellen der Drehrichtung der Rechenräder ist es zweckmässig, dass an die Lagerhülse ein Verstellgestänge, das vorzugsweise einen am Maschinenrahmen gelagerten Winkelhebel umfasst, angelenkt ist, mittels dessen eine Klauenkupplung in der Antriebsanordnung für die Rechenräder betätigbar ist.

In der Zeichnung ist ein Ausführungsbeispiel einer erfindungsgemässen Heuwerbungsmaschine dargestellt. Es zeigen:

Fig. 1 eine Draufsicht auf die Maschine in Streustellung,

Fig. 2 eine Draufsicht der Maschine in Seitenschwadstellung,

Fig. 3 eine Draufsicht auf die Maschine in Stellung zum Nachtschwadziehen,

Fig. 4 eine Seitenansicht der Maschine gemäss Fig. 1 bzw. 2,

Fig. 5 eine Ansicht einer Einzelheit der Maschine in vergrössertem Massstab,

Fig. 6 eine Draufsicht auf Fig. 5 und

Fig. 7 einen Schnitt gemäss Linie VII-VII in Fig. 5.

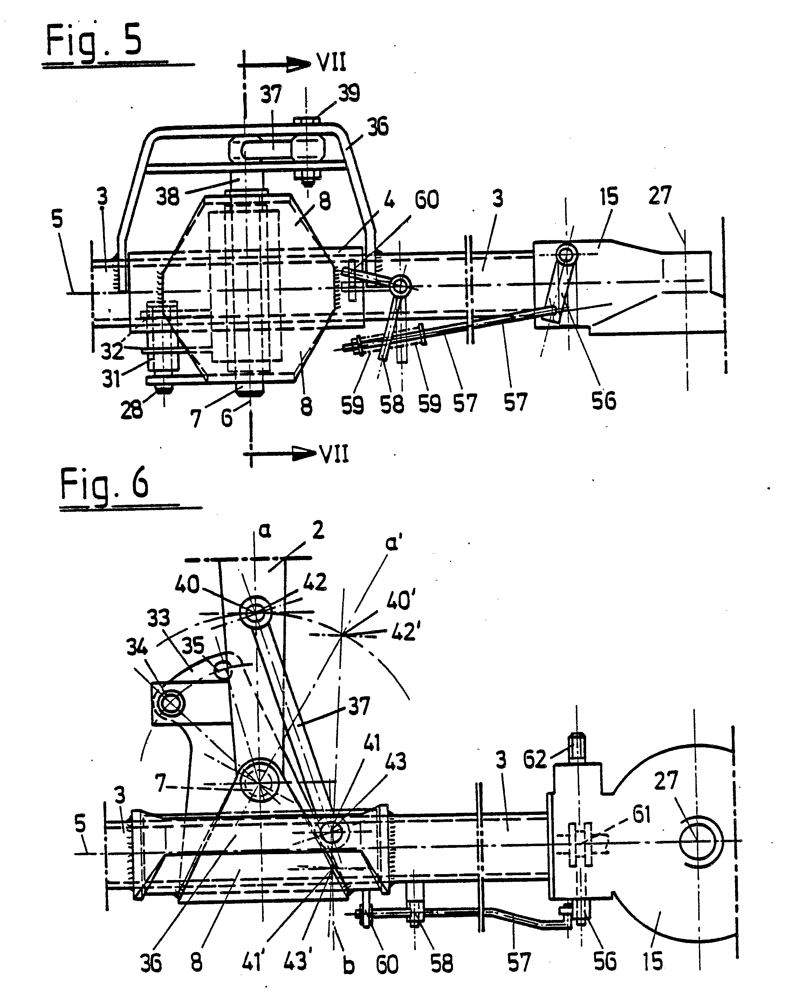

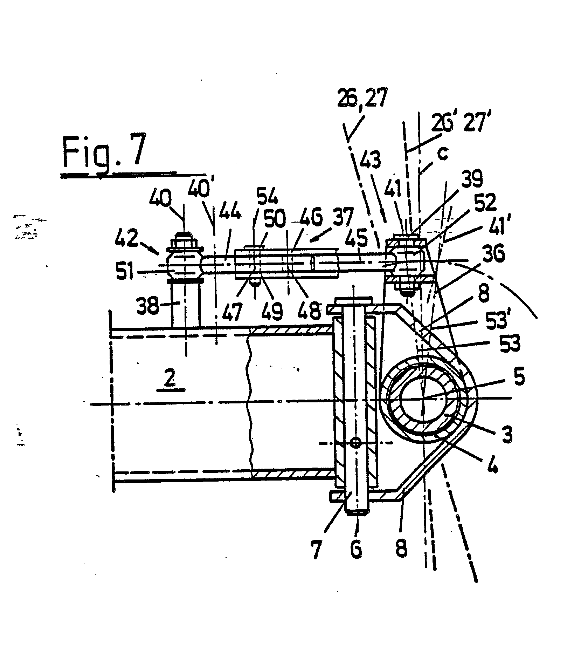

Die dargestellte Heuwerbungsmaschine weist einen Anbaurahmen 1 zum Anbau der Maschine an das Dreipunkthubwerk eines Zugfahrzeuges auf, an welchem Anbaurahmen ein Zugbalken 2 angebracht ist, an dessen hinterem Ende ein quer zur Fahrtrichtung F angeordneter, rohrförmiger Maschinenrahmen 3, in einer koaxialen Lagerhülse 4 um seine im wesentlichen horizontale Längsachse 5 verdrehbar gelagert und um die im wesentlichen lotrechte Achse 6 einer in der Längsmittelebene der Maschin angeordneten Schwenkachse 7, die in einem Lagerhebel 8 der Lagerhülse 4 gelagert ist, verschwenkbar angelenkt ist (Fig. 5 und 7). Der Anbaurahmen 1 ist mit unteren Anlenkpunkten 11, 12 und einem oberen Anlenkpunkt 13 zum Anbau an das Zugfahrzeug versehen.

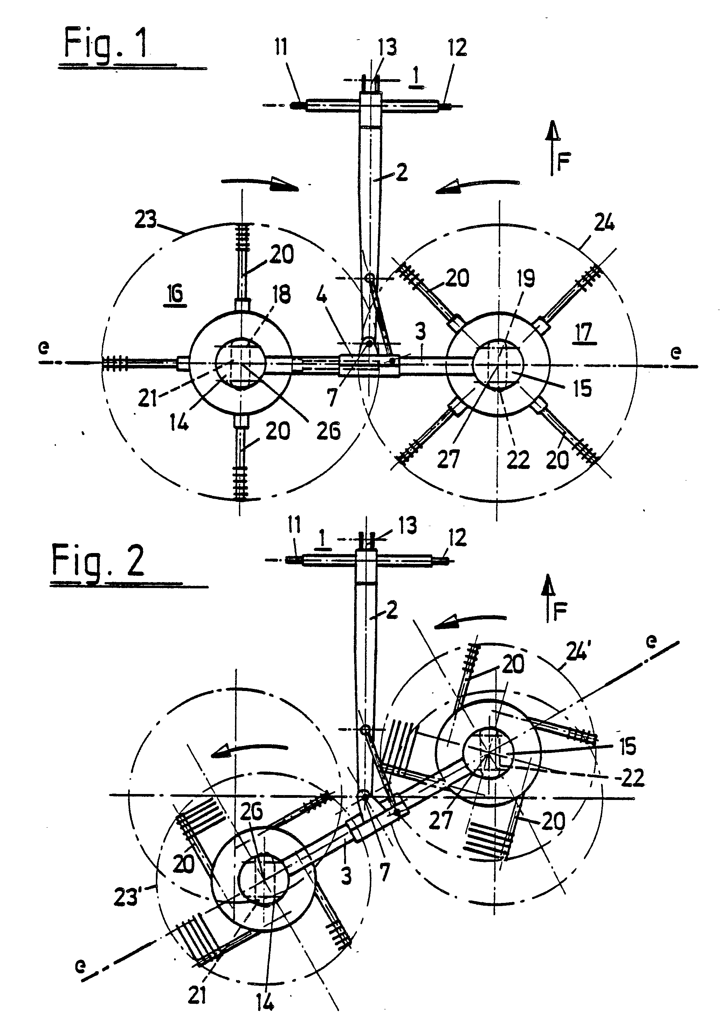

Am Maschinenrahmen 3 sind beiderseits Getriebegehäuse 14, 15 für zwei Rechenräder 16, 17 befestigt, an denen die Naben 18, 19 der Rechenräder 16, 17 gelagert sind. Die Rechenräder 16, 17 sind mittels, gegebenenfalls höhenverstellbaren, Stützrädern 21, 22 am Boden abgestützt; anstelle dieser Stützräder könnten auch andere Stützglieder verwendet werden. Die Rechenräder 16, 17, deren Rechkreise in Zettstellung mit 23, 24 und in Seitenschwadstellung der Maschine 23', 24' bezeichnet sind, sind mit in Rechstellung und aus dieser verschwenkbaren, an einer nicht dargestellten Steuerbahn geführten Zinkentragarmen 20 versehen (Fig. 2), die in der Zettstellung der Maschine feststellbar sind, so dass die Steuerung unwirksam ist (Fig. 1). Die Längsachse 5 des Maschinenrahmens 3 ist hiebei im wesentlichen horizontal angeordnet und verläuft in der Verbindungsebene e der Drehachsen 26, 27 der Rechenräder 16, 17.

In der Zettstellung gemäss Fig. 1 sind die Rechenräder 16, 17 nebeneinander, mit dem Maschinenrahmen 3 senkrecht zur Fahrtrichtung F eingestellt, wobei die Rechradachsen 26, 27 zueinander parallel in Fahrtrichtung unter einem Winkel α von etwa 15° nach vorne geneigt sind. Die Rechenräder 16, 17 werden hiebei gegenläufig angetrieben.

Zum Umstellen der Maschine aus der Zettstellung in die Seitenschwadstellung gemäss Fig. 2 wird neben dem Umstellen der Zinkentragarme, das Aufrichten der Rechradachsen 26, 27 in eine im wesentlichen vertikale, nach vorne nur geringfügig geneigte Lage (1-4°) und das Verschwenken des Zugbalkens 2 in eine Schräglage zum Maschinenrahmen 3 vorgenommen. In der Seitenschwadstellung gemäss Fig. 2 werden die Rechenräder 16, 17 gleichsinnig angetrieben.

Der Zugbalken 2 und der Maschinenrahmen 3 werden in den vorher beschriebenen Arbeitslagen mittels eines Riegelbolzens 28, der in einer Riegelführung 31, die an einer Konsole 32 des Zugbalkens 2 vorgesehen ist, und einer Rastplatte 33, die an dem Lagerhebel 8 der Lagerhülse 4 befestigt und mit zwei Rastbohrungen 34, 35 versehen ist, verschwenkfest verriegelt.

Zur Kopplung der Verschwenkung des Zugbalkens 2 und der Veränderung des Neigungswinkels der Rechradachsen 26, 27 ist an der Oberseite des Maschinenrahmens 3 ein Stellhebel 36 vorgesehen, der zwecks Erhöhung der mechanischen Stabilität die Lagerhülse 4 übergreift und beidseitig derselben mit dem Maschinenrahmen 3 verschweisst ist. An den Stellhebel 36 greift eine Stellstange 37 an, die einenends am Zugbalken 2 im Anlenkpunkt 42, und andernends im Anlenkpunkt 43 am Stellhebel 36 angelenkt ist. Die Stellstange 37 ist dabei mit je einem Kugelgelenk 51, 52 am Lagerbolzen 38 des Zugbalkens und am Lagerbolzen 39 des Stellhebels 36 gelagert. Es ist auch denkbar, nur ein Kugelgelenk vorzusehen und die Stellstange 37 andernends nur schwenkbar zu lagern.

In der Zettstellung der Maschine (Fig. 1) liegt der eine Anlenkpunkt 42 in der senkrecht zur Längsachse 5 des Maschinenrahmens 3 verlaufenden Längsmittelebene a des Zugbalkens 2 und in der Schwenkebene b des Zugbalkens 36 der Anlenkpunkt 43 (Fig. 6). In der Seitenschwadstellung der Maschine (Fig. 2) liegt die Längsmittelebene a' des Zugbalkens 2 schräg zur Längsachse 5 und die Anlenkpunkte der Stellstange 37 liegen bei 42' und 43' (Fig. 6).

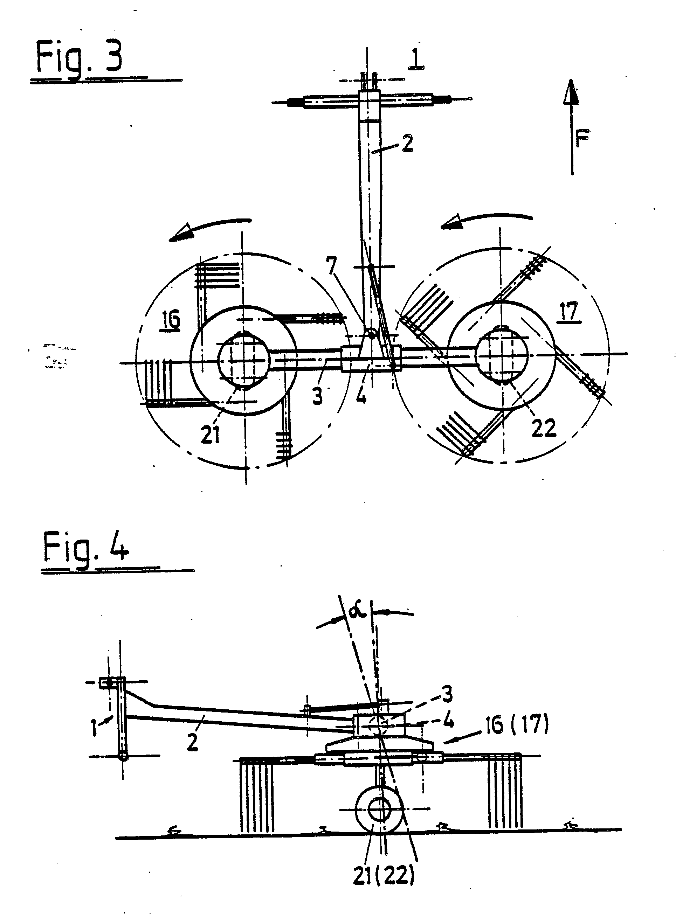

Zum Ziehen der kleineren Nachtschwaden (Fig. 3) ist es notwendig, dass beide Rechenräder 16, 17 gleichsinnig umlaufen und jedes für sich einen Schwad zieht.

Dazu wird die Maschine in die Zettstellung gebracht und eine abgeänderte Stellstange 37 zur Anwendung gebracht, die längenveränderlich ausgebildet ist (Fig. 7). Die Stellstange besteht in diesem Falle aus den beiden Teilstangen 44 und 45, von denen die eine, 45, mit einem rohrförmigen Endstück 46 versehen ist, in welchem die andere Teilstange 44 geführt ist, mit zwei Bohrungen 47, 48, wobei das Endstück 46 mit einer Bohrung 49 versehen ist, die mittels des Absteckbolzens 50 absteckbar ist. Wird die Stellstange 37 in ihre längere Abmessung gebracht, richten sich die Rechradachsen 26, 27 in die für das Schwaden geforderte Lage auf. Die Stellstange 37 könnte zwecks Längenveränderung beispielsweise auch als hydraulischer Stellzylinder ausgebildet sein.

In Fig. 7 sind die im wesentlichen lotrechte Achse 40 durch den Lagerbolzen 38 des Zugbalkens 2, die gleichfalls im wesentlichen lotrechte Achse 41 durch den Lagerbolzen 39 am Stellhebel 36, die gedachte Achse 53 des Stellhebels 36 durch den Anlenkpunkt 43 der Stellstange 36 und die Längsachse 5 des Maschinenrahmens 3, sowie die Achse 54 der Bohrung 47 des vorderen Stangenteiles 44, die mit dem Absteckbolzen 50 gegenüber der Bohrung 49 festgestellt ist, und die Rechradachsen 26, 27, in der Lage, welche sie in der Zettstellung zueinander einnehmen, dargestellt. Die Achse 40 verläuft hiebei in der Längsmittelebene der Maschine, während die Achse 41 im Abstand von der Längsmittelebene angeordnet ist (Fig. 6). Die Achse 40', die Achse 41', die gedachte Achse 53', die Rechradachsen 26', 27', sind in der Lage, welche diese Bauteile in der Schwadstellung der Maschine zueinander einnehmen, dargestellt. In der Seitenschwadstellung nehmen die Achsen 40', 41', 53' und die Rechradachsen 26', 27' ihre entsprechende Lage zueinander ein. Der Absteckbolzen 50 legt dabei die Bohrung 48 zusammen mit der Bohrung 49 fest, so dass die Stellstange 36 verlängert ist.

Die lotrechte Ebene c läuft durch die Längsachse 5 des Maschinenrahmens 3. Der Schwenkkreis in der Schwenkebene b des Stellhebels 36 ist angedeutet.

Beim Zetten (Fig. 1) laufen die beiden Rechenräder 16, 17 gegensinnig um, beim Seiten- und Nachtschwadenziehen (Fig. 2, 3) jedoch gleichsinnig. Das Umstellen der Drehrichtung des einen Rechenrades 16 geschieht durch Umschalten des Drehsinnes der Antriebswelle mittels eines Schaltgestänges, das im besonderen aus einem Schalthebel 56, einer Übertragungsstange 57 und einem am Maschinenrahmen 3 gelagerten Winkelhebel 58 besteht, der über Ausgleichsfedern 59 mit ersteren gekoppelt ist und mit seinem zweiten Hebelarm mit einer Schaltöse 60 in einer Lasche der Lagerhülse 4 gekoppelt ist. Der Schalthebel 56 betätigt hiebei eine in der Antriebsanordnung für die Rechenräder vorgesehene Klauenkupplung 61.

Durch diese Massnahme erfolgt das Umschalten der Rechenräder 16, 17 auf gleichen Drehsinn stets dann, wenn sich die Rechradachsen 26, 27 in der nahezu lotrechten Schwadstellung 26', 27' befinden.

Der Antrieb der Rechenräder 16, 17 erfolgt in bekannter Weise von einem Zapfwellenanschluss 62 durch den hohlen, rohrförmigen Maschinenrahmen 3.

Das Verstellen der Drehachsen der Rechenräder kann in gleichfalls bekannter Weise mit dem Verstellen der Steuerbahn für die Rechenzinken kombiniert bzw. koordiniert werden.

## Patentansprüche

1. Heuwerbungsmaschine mit mindestens zwei angetriebenen Rechenrädern (16, 17), die mit je einem Stützglied (21, 22) am Boden abgestützt und an einem gemeinsamen Maschinenrahmen (3) gelagert sind, der an einem Zugbalken (2) oder dgl. eines Anbaurahmens (1) für den Anbau an ein Zugfahrzeug um eine im wesentlichen lotrechte Schwenkachse (7) schwenkbar gelagert ist, wobei die Rechenräder (16, 17) an Zinkentragarmen (20) geführte Zinken aufweisen und die Drehachsen (26, 27) der Rechenräder (16, 17) von einer im wesentlichen vertikalen Arbeitsstellung zum Schwadformen in eine zur Vertikalen geneigte Arbeitsstellung zum Zetten verstellbar sind, dadurch gekennzeichnet, dass eine mit ihrer Achse unmittelbar in der Verbindungsebene (e) der im wesentlichen lotrechten Drehachsen (26, 27) der Rechenräder (16, 17) gelegene Lagerhülse (4) mit im wesentlichen horizontaler Achse (5) vorgesehen ist, in welcher der Maschinenrahmen (3) verdrehbar gelagert ist und dass der Maschinenrahmen (3) mit einem Stellhebel (36) drehfest verbunden ist, an dem eine Stellstange (37) einenends gelenkig gelagert ist, die andernends an dem Zugbalken oder dgl. (2) schwenkbar gelagert ist.

2. Heuwerbungsmaschine nach Anspruch 1, dadurch gekennzeichnet, dass die Lagerhülse (4) in einem Lagerhebel (8) angeordnet und mit diesem fest verbunden ist, der um die im wesentlichen lotrechte Schwenkachse (7) an dem Zugbalken oder dgl. (2) schwenkbar gelagert ist.

3. Heuwerbungsmaschine nach Anspruch 1 oder 2, dadurch gekennzeichnet, dass die Achse der Lagerhülse (4) koaxial zur Längsachse (5) des zumindest teilweise rohrförmig ausgebildeten Maschinenrahmens (3) angeordnet ist, und der Maschinenrahmen (3) die Lagerhülse (4) durchsetzt.

4. Heuwerbungsmaschine nach Anspruch 2 oder 3, dadurch gekennzeichnet, dass die Schwenkachse (7) für die Lagerhülse (4) im wesentlichen in der Längsmittelebene der Maschine angeordnet ist.

5. Heuwerbungsmaschine nach einem der Ansprüche 1 bis 4, dadurch gekennzeichnet, dass der Stellhebel (36) die Lagerhülse (4) übergreift und beidseitig derselben mit dem Maschinenrahmen (3) fest verbunden ist (Fig. 5, 6).

6. Heuwerbungsmaschine nach einem der Ansprüche 1 bis 5, dadurch gekennzeichnet, dass die Stellstange (37) an ihren beiden Enden mit je einem Kugelgelenk (51, 52) versehen ist, von denen das eine (51) an dem Zugbalken oder dgl. (2) und das andere (52) an dem Stellhebel (36) angelenkt ist (Fig. 7).

7. Heuwerbungsmaschine nach einem der Ansprüche 1 bis 6, dadurch gekennzeichnet, dass die Stellstange (37) längenveränderlich ausgebildet ist (Fig. 7).

8. Heuwerbungsmaschine nach Anspruch 7, dadurch gekennzeichnet, dass die Stellstange (37) aus zwei teleskopartig gegeneinander verschiebbaren Teilen (44, 45) besteht, die mittels eines Steckbolzens (50) in mindestens zwei Stellungen feststellbar sind (Fig. 7).

9. Heuwerbungsmaschine nach Anspruch 7, dadurch gekennzeichnet, dass die Stellstange (37) als druckmittelbetätigbarer, insbesondere hydraulischer, Stellzylinder mit zwei Anschlägen ausgebildet ist.

10. Heuwerbungsmaschine nach Anspruch 1, dadurch gekennzeichnet, dass mit der Lagerhülse (4) eine mit Rastausnehmungen (34, 35) versehene Rastplatte (33) für eine Verriegelungs- bzw. Rastvorrichtung (28, 33) fest verbunden ist, mittels welcher der Maschinenrahmen (3) in bezug auf den Zugbalken oder dgl. (2) in mindestens zwei Schwenklagen feststellbar ist.

11. Heuwerbungsmaschine nach einem der Ansprüche 1 bis 10, dadurch gekennzeichnet, dass an die Lagerhülse (4) ein Verstellgestänge (56, 57), das einen am Maschinenrahmen (3) gelagerten Winkelhebel (58) umfasst, angelenkt ist, mittels dessen eine Klauenkupplung (61) in der Antriebsanordnung für die Rechenräder (16, 17) betätigbar ist.

## Claims

1. A hay-spreading machine with at least two driven rake wheels (16, 17), which are each supported on the ground by a supporting member (21, 22) and are mounted on a common machine frame (3), which is mounted on an anchor tie beam (2) or the like of an attachment frame (1) for attachment to a towing vehicle and which can be swung about a substantially vertical swivel axis (7), the rake wheels (16, 17) comprising prongs guided on carrier arms (20), and the axes of rotation (26, 27) of the rake wheels (16, 17) being displaceable from a substantially vertical working position for forming swaths to a working position, inclined from the vertical, for tedding, characterized in that a bearing sleeve (4) is provided, which has a substantially horizontal axis (5) disposed directly in the plane (e) connecting the substantially vertical axes of rotation (26, 27), the machine frame (3) being rotatably mounted in said bearing sleeve, and in that the machine frame (3) is connected to, and rotates with, an adjustable lever (36), to which a setting bar (37) is linked by one of its ends, while its other end is swivellably mounted on the anchor tie beam or the l ike (2).

2. A hay-spreading machine according to Claim 1, characterized in that the bearing sleeve (4) is arranged in a guide bearing (8) and is firmly connected thereto, which guide bearing is mounted on the anchor tie beam or the like (2) and is swivellable about the substantially vertical swivel axis (7).

3. A hay-spreading machine according to Claim 1 or 2, characterized in that the axis of the bearing sleeve (4) is coaxial with the longitudinal axis (5) of the at least partially tubular machine frame (3), and the machine frame (3) extends through the bearing sleeve (4).

4. A hay-spreading machine according to Claim 2 or 3, characterized in that the swivel axis (7) of the bearing sleeve (4) is disposed substantially in the longitudinal middle plane of the machine.

5. A hay-spreading machine according to any one of Claims 1 to 4, characterized in that the adjustable lever (36) straddles the bearing sleeve (4) and, at both sides thereof, is firmly connected to the machine frame (3) (figures 5, 6).

6. A hay-spreading machine according to any one of Claims 1 to 5, characterized in that the setting bar (37) is provided at each of its two ends with a ball joint (51, 52), one of which, ball joint (51), is linked to the anchor tie beam or the like (2) and the other (52) to the adjusting lever (36) (figure 7).

7. A hay-spreading machine according to any one of Claims 1 to 6, characterized in that the setting bar (37) is variable in length (figure 7).

8. A hay-spreading machine according to Claim 7, characterized in that the setting bar (37) consists of two parts (44, 45), which are telescopically displaceable relatively to each other and which can be held in at least two positons by means of a pin (50) (figure 7).

9. A hay-spreading machine according to Claim 7, characterized in that the setting bar (37) is designed as a setting cylinder which comprises two stops and can be actuated by a pressure medium, and in particular hydraulically.

10. A hay-spreading machine according to Claim 1, characterized in that there is firmly connected to the bearing sleeve (4) a latching plate (33) having latching recesses (34,35) for a locking or latching device (28, 33), by means of which the machine frame (3) can be held in at least two swivel positions in relation to the anchor tie bar or the like (2).

11. A hay-spreading machine according to any one of Claims 1 to 10, characterized in than an adjustment rod system (56, 57) is linked to the bearing sleeve (4), which system comprises a toggle lever (58) which is mounted on the machine frame (3) and by means of which a claw coupling (61) in the drive arrangement for the rake wheels (16, 17) can be actuated.

**Revendications**

1. Faneuse comportant au moins deux râteaux circulaires (16, 17) entraînés, qui reposent chacun sur le sol à l'aide d'un organe d'appui (21,22) et sont montés sur un châssis commun (3) de la machine installé à pivotement autour d'un axe de pivotement (7) sensiblement vertical, sur un timon de traction (2) ou élément analogue d'un cadre d'attelage (1) permettant l'attelage à un véhicule tracteur, lesdits râteaux circulaires (16, 17) présentant des dents guidées sur des bras (20) de support de dents, et les axes de rotation (26, 27) de ces râteaux circulaires (16, 17) étant adjustables d'une position de travail sensiblement verticale pour former des andains, à une position de travail inclinée par rapport à la verticale en vue du fanage, caractérisée par le fait qu'il est prévu une douille de portée (4) à axe sensiblement horizontal (5), dont l'axe se trouve directement dans le plan de jonction (e) des axes de rotation (26, 27) sensiblement verticaux des râteaux circulaires (16, 17), et dans laquelle le châssis (3) de la machine est monté rotatif; et par le fait que le châssis (3) de la machine est relié avec assujettissement en rotation à un levier d'ajustement (36), sur lequel est articulée par une extrémité une barre d'ajustement (37) qui est montée pivotante, par son autre extrémité, sur le timon de traction ou élément analogue (2).

2. Faneuse selon la revendication 1, caractérisée par le fait que la douille de portée (4) est disposée et assujettie à l'intérieur d'un levier de montage (8) pouvant pivoter sur le timon de traction ou élément analogue (2), autour d'un axe de pivotement (7) sensiblement vertical.

3. Faneuse selon la revendication 1 ou 2, caractérisée par le fait que l'axe de la douille de portée (4) est disposé coaxialement à l'axe longitudinal (5) du châssis (3) de la machine présentant au moins en partie une réalisation tubulaire, ce châssis (3) de la machine traversant de part en part ladite douille de portée (4).

4. Faneuse selon la revendication 2 ou 3, caractérisée par le fait que l'axe de pivotement (7) de la douille de portée (4) se trouve pour l'essentiel dans le plan médian longitudinal de la machine.

5. Faneuse selon l'une des revendications 1 à 4, caractérisée par le fait que le levier d'ajustement (36) enjambe la douille de portée (4) et est relié rigidement au châssis (3) de la machine, de part et d'autre de cette douille (figures 5, 6).

6. Faneuse selon l'une des revendications 1 à 5, caractérisée par le fait que la barre d'ajustement (37) est munie, à ses deux extrémités, d'une articulation respective à rotule (51, 52) dont l'une (51) est articulée sur le timon de traction ou élément analogue (2), l'autre (52) étant articulée sur le levier d'actionnement (36) (figure 7).

7. Faneuse selon l'une des revendications 1 à 6, caractérisée par le fait que la barre d'ajustement (37) est réalisée de longueur variable (figure 7).

8. Faneuse selon la revendication 7, caractérisée par le fait que la barre d'ajustement (37) se compose de deux parties (44, 45) mobiles télescopiquement l'une par rapport à l'autre, qui peuvent être arrêtées dans au moins deux positions au moyen d'une goupille enfichable (50) (figure 7).

9. Faneuse selon la revendication 7, caractérisée par le fait que la barre d'ajustement (37) est réalisée sous la forme d'un vérin d'ajustement à deux butées pouvant être actionné par un fluide sous pression, en particulier un vérin hydraulique.

10. Faneuse selon la revendication 1, caractérisée par le fait qu'une plaque d'encliquetage (33) percée de trous d'arrêt (34,35) et associée à un dispositif de verrouillage ou d'encliquetage (28, 33) est reliée rigidement à la douille de portée (4), plaque au moyen de laquelle le châssis (3) de la machine peut être bloqué dans au moins deux positions de pivotement par rapport au timon de traction ou élément analogue (2).

11. Faneuse selon l'une des revendications 1 à 10, caractérisée par le fait qu'une tringlerie d'ajustement (56, 57), englobant un levier coudé (58) monté sur le châssis (3) de la machine et au moyen de laquelle un accouplement (61) à crabots du dispositif d'entraînement des râteaux circulaires (16, 17) peut être actionné, est articulée sur la douille de portée (4).

Fig. 1

Fig. 2

## Fig. 3

## Fig. 4

Fig. 5

Fig. 6

Fig. 7